# EUROPÄISCHE PATENTANMELDUNG

(11) **EP 1 072 877 A1**
(43) Veröffentlichungstag der Anmeldung: **31.01.2001**
(21) Anmeldenummer: 99114203.5
(22) Anmeldetag: 24.07.1999
(51) Int. Cl.: G01N 1/22, C12M 1/12

(54) **Vorrichtung zum Prüfen der mikrobiologischen Qualität eines gasförmigen Mediums**

(71) Anmelder: Hoiss, Jacob, Dr.-Ing., D-80637 München (DE)
(72) Erfinder: Hoiss, Jacob, Dr.-Ing., D-80637 München (DE)
(74) Vertreter: Dreiss, Fuhlendorf, Steimle & Becker, Patentanwälte

(57) **Zusammenfassung**

Eine Vorrichtung (10) zum Prüfen der mikrobiologischen Qualität einer definierten Menge eines druckbeaufschlagten gasförmigen Mediums besitzt ein mit einem Sterilfilter (17) versehenes, steriles Autoklavierteil (11), dem das zu prüfende gasförmige Medium zugeführt ist, und ein der Durchflußmessung dienendes Meßteil (12) zum einstellbaren Bestimmen der definierten zu prüfenden Gasmenge, wobei das Meßteil mit dem Autoklavierteil (11) kuppelbar verbunden ist. Dadurch ist eine einfache Probenahme- und Prüfmethode geschaffen, die preiswert ist und ortsunabhängig oder stationär eingesetzt werden kann.

## Beschreibung

Die vorliegende Erfindung bezieht sich auf eine Vorrichtung zum Prüfen der mikrobiologischen Qualität einer definierten Menge eines druckbeaufschlagten gasförmigen Mediums entsprechend dem Oberbegriff des Anspruchs 1.

Gasförmige Medien, die mit sterilen Gütern in Berührung kommen, wie bspw, als Hilfsmittel zum Ausdrücken, für Fermentationsprozesse, als Abfüllgase und dergleichen, oder die im klinischen Bereich bei der Behandlung von Patienten eingesetzt werden, müssen selbst steril sein. Die Vorschriften für die Sterilität eines gasförmigen Mediums sollten bzw. müssen daher überwacht werden.

Aufgabe der vorliegenden Erfindung ist es deshalb, eine Vorrichtung zum Prüfen der mikrobiologischen Qualität einer definierten Menge eines druckbeaufschlagten gasförmigen Mediums zu schaffen, die eine einfache Probenahme- und Prüfmethode schafft und darüberhinaus preiswert ist und ortsunabhängig oder stationär eingesetzt werden kann.

Zu Lösung dieser Aufgabe sind bei einer Vorrichtung zum Prüfen der mikrobiologischen Qualität einer definierten Menge eines druckbeaufschlagten gasförmigen Mediums die im Anspruch 1 angegebenen Merkmale vorgesehen.

Durch die erfindungsgemäßen Maßnahmen ist es möglich, die mikrobiologische Qualität einer definierten Menge eines druckbeaufschlagten gasförmigen Mediums in einfacher Weise und mit einer kostengünstigen Vorrichtung zu überprüfen. Dies erfolgt in der Weise, daß das Meßteil auf eine definierte Durchflußmenge pro Zeiteinheit des zu prüfenden gasförmigen Mediums und auf die Durchflußzeitdauer eingestellt wird. Das Sterilfilter, das vom zu prüfenden gasförmigen Medien durchströmt worden ist, kann dann aus dem Autoklavierteil entnommen und einer entsprechenden mikrobiologischen Auswertungen unterzogen werden.

Gemäß einer Ausführungsform mit dem Merkmal des Anspruchs 2 ist das Autoklavierteil konstruktiv derart ausgebildet, daß es nach jeder Sterilisation wieder einsetzbar ist. Weitere vorteilhafte Ausgestaltungen des Autoklavierteils ergeben sich aus den Merkmalen des Anspruchs 3 und/oder 4.

Mit dem Merkmal des Anspruchs 5 ist erreicht, daß am Ende einer Messung nach Abschalten der Zuführung des zu messenden gasförmigen Mediums das Autoklavierteil in einfacher Weise und ohne daß dessen Innenseite mit Umgebungsluft in Verbindung kommt, drucklos gemacht werden kann. In für die Handhabung vorteilhafter Weise ist dabei das 3-Wege-Ventil entsprechend dem Merkmal des Anspruchs 6 ausgebildet.

Gemäß einem bevorzugten Ausführungsbeispiel vorliegender Erfindung ist das Meßteil gemäß den Merkmalen des Anspruchs 7 ausgebildet. Die Menge an gasförmigem Medium in der Bypaß-Strecke ist dabei proportional zur Hauptmenge in der den Druck reduzierenden Venturi-Meßstrecke. In vorteilhafter Weise ist dabei gemäß dem Merkmal des Anspruchs 8 ein Druckminderventil dieser Meßstrecke vorgeschaltet. Durch diese Druckreduzierung wird ein von Druckpulsationen unabhängiger konstanter Durchfluß des zu prüfenden gasförmigen Mediums erreicht. Diese Anordnung der Meßstrecke glättet außerdem im laufenden Betrieb Druckschwankungen im Speisenetz des gasförmigen Mediums und/oder solchen, die von einem sich zusetzenden Sterilfilter herrühren.

Mit dem Merkmal gemäß Anspruch 9 ist erreicht, daß eine zu erreichende definierte Durchflußmenge an zu prüfendem gasförmigen Medium einstellbar ist.

Mit dem Merkmal gemäß Anspruch 10 ist nach dem Zuschalten von Hand eine automatisch ablaufende Meßphase erreicht.

Gemäß einem anderen Ausführungsbeispiel vorliegender Erfindung ist das Meßteil mit dem Merkmalen nach Anspruch 11 ausgestattet. Bei einem derartigen Massedurchflußmeßelement ist der gemessene Massenfluß direkt proportional zu dem zu messenden Gasvolumen und somit definiert einzustellen.

Zur Regelung des Massenflußes dieser Meßstrecke, die ebenfalls die möglicherweise auftretenden oben genannten Druckschwankung zu glätten geeignet ist, sind die Merkmale des Anspruchs 12 und/oder 13 vorgesehen.

Den Einsatz einer derartigen Vorrichtung erleichternde Maßnahmen ergeben sich aus den Merkmalen des Anspruchs 14 und/oder des Anspruchs 15, wobei im letzteren Falle in vorteilhafter Weise ein ortunabhängiger Einsatz möglich ist.

Weitere Einzelheiten der Erfindung sind auf folgender Beschreibung zu entnehmen, in der die Erfindung anhand der in der Zeichnung dargestellten Ausführungsbeispiele näher beschrieben und erläutert ist. Es zeigen:
- Figur 1: in schematischer schaltungstechnischer Darstellung eine Vorrichtung zum Prüfen der mikrobiologischen Qualität einer definierten Menge eines druckbeaufschlagten gasförmigen Mediums gemäß einem bevorzugten Ausführungsbeispiel vorliegender Erfindung und
- Figur 2: eine der Figur 1 entsprechende Darstellung einer Vorrichtung, jedoch gemäß einem anderen Ausführungsbeispiel vorliegender Erfindung.

Die in der Zeichnung gemäß zweier Ausführungsbeispiele dargestellte Vorrichtung 10 bzw. 10' zur Probenahme und Prüfung der mikrobiologischen Qualität einer definierten Menge eines druckbeaufschlagten gasförmigen Mediums derart, daß solche für sterile Produkte verwendete gasförmige Medien hinsichtlich der Vorschriften für sogenannte kolonienbildenden Einheiten (KBE) stichprobenartig oder konstant überwacht werden können. Hierzu besitzt die Vorrichtung 10 bzw. 10' ein Autoklavierteil 11 mit einem Gaseintritt 13 und ein Meßteil 12 bzw. 12' mit einem Gasaustritt 14. Das gasförmige Medium ist bspw. Druckluft.

Das mit dem Gaseintritt 13 verbindbare Autoklavierteil 11 besitzt ein von Hand öffenenbaren Gehäuse 16, in welchem in schematisch angedeuteter Weise ein Sterilfilter 17 bspw. in Form einer hydrophoben Teflonmebran austauschbar angeordnet ist. Das Autoklavierteil 11 ist ferner mit einem Absperrventil 18 in Form eines von Hand betätigbaren Kugelhahns gaseintrittseitig versehen. Der Gaseintritt besitzt bspw. eine übliche Steckkupplung, deren einer Teil an einem zum Absperrventil 18 führenden Verbindungsschlauch und deren anderer Teil am Anschluß 19 bspw. eines Druckluftsystems, wie es üblicherweise in der Industrie verwendet wird, vorgesehen ist. Ein derartiges Druckluftsystem führt Druckluft von ca. 5 bis 6 bar zu. Es versteht sich, daß statt Druckluft auch andere einzusetzende gasförmige Medien auf Sterilität bzw. in mikrobiologischer Hinsicht überprüft werden können. Das Autoklavierteil 11, das bei beiden Ausgestaltungen der Vorrichtung 10, 10' identisch ausgebildet ist, ist über eine von Hand betätigbare Kupplung, vorzugsweise einer Clamp-Kupplung 21 mit dem Meßteil 12 oder 12' in einfacher Weise von Hand lösbar und befestigbar verbunden.

Das Autoklavierteil 11 ist derart ausgebildet, daß es mit eingelegtem Sterilfilter in einfacher Weise in einem Autoklaven, in einer geeigneten Folie eingeschweißt, bei einer Maximaltemperatur von etwa 134° Celsius in gesättigtem Wasserdampf sterilisiert werden kann. Beispielsweise erfolgt die Sterilisation bei 121°C 20 Minuten lang.

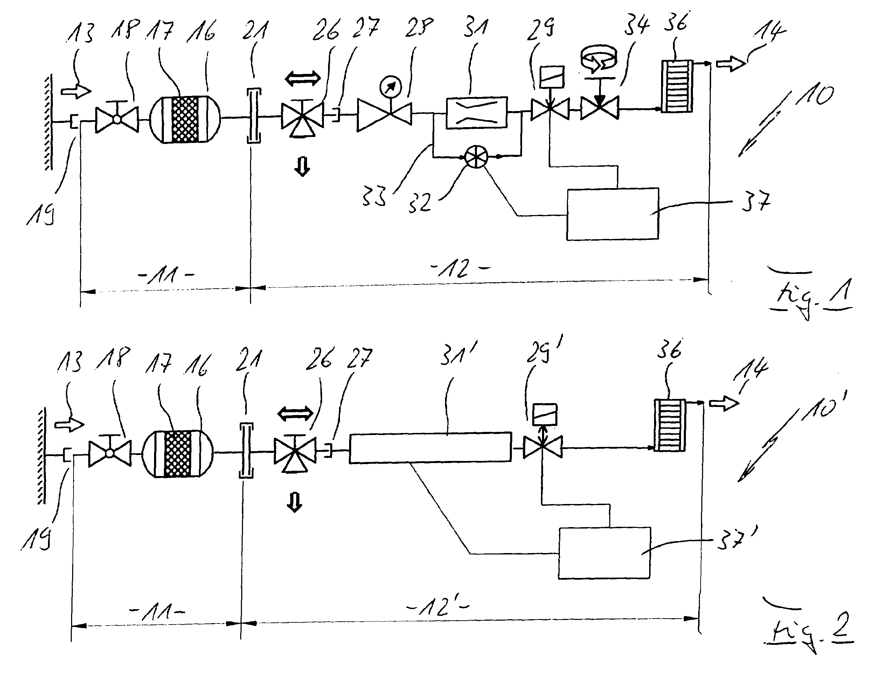

Das Meßteil 12 gemäß Figur 1 besitzt ein 3-Wege-Ventil 26, bspw. in Form eines Schieberventils, das eingangsseitig mit dem betreffenden Teil der Clamp-Kupplung 21 versehen und ausgangseitig über eine Schnellkupplung 27 mit einem mit einem Manometer versehenen Druckminderventil bzw. Reduzierventil 28 verbindbar bzw. verbunden ist. Zwischen diesem Druckminderventil 28 und einem Magnetventil 29 besitzt das Meßteil 12 eine Venturi-Meßstrecke 31 und eine mit einer Meß- turbine 32 versehene Bypaß-Strecke 33. Gasaustrittsseitig ist das Magnetventil 29 mit einem von Hand einstellbaren Drosselventil, vorzugsweise einem Drosselnadelventil 34 versehen, das austrittsseitig mit einem Schalldämpfer 36 verbunden ist, der mit dem Gasaustritt 14 versehen ist. Ein Steuerelement 37, das in nicht dargestellter Weise einen Ausschalter mit einer Zeitschaltuhr ausweist, ist einerseits mit der eine LCD-Anzeige aufweisenden Meßturbine 32 und andererseits mit dem Magnetventil 29 elektrisch verbunden. Das Steuerelement 37 ist in nicht weiter dargestellter Weise bspw. über ein Netzteil mit Netzspannung verbindbar.

Für die Messung mit Hilfe der Vorrichtung 10 dient das Druckreduzierventil 28 zu einer Druckreduzierung des zu prüfenden druckbeaufschlagten gasförmigen Mediums von bspw. 5 bis 6 bar auf etwa 2,5 bar, während mit dem von Hand einstellbaren Drosselventil 34 ein definierter konstanter Durchflußwert bzw. Durchflußrate von bspw. 41,6 l/min bei Luft durch Beobachtung der LCD-Anzeige an der Meßturbine 32 eingestellt werden kann. Mit Hilfe eines vorgegebenen Meßzeitwertes an der Zeitschaltuhr von bspw. 24 Minuten ist die Probenahme einer definierten Menge von bspw. einem Kubikmeter Luft erreicht. Je nach Kalibrierung mittels des Drosselventils 34 kann bspw. eine Menge zwischen 20 und 100 l/min erreicht werden. Desweiteren dient die Führung des zu prüfenden gasförmigen Mediums im Meßteil 12 dazu, Druckschwankungen im genannten Druckluftsystem und/oder solche Druckschwankungen auszugleichen, die von einem möglichen langsamen Zusetzen des Sterilfilters 17 aufgrund Verunreinigungen im zu prüfenden gasförmigen Medium herrühren.
Gemäß einer nicht dargestellten Variante zum Ausführungsbeispiel der Figur 1 entfällt die Bypaß-Strecke 33 und die Meßturbine 32 ist direkt im Hauptstrom angeordnet. Dies ist vorteilhaft bei sehr kleinen Durchflußmengen von z. B. bei Luft kleiner als 20 l/min.

Das Meßteil 12' gemäß Figur 2 unterscheidet sich von dem Meßteil 12 nach Figur 1 durch die Ausgestaltung der Durchflußmeßanordnung. Das Meßteil 12' verwendet ein Massendurchflußmeßelement 31', das eingangsseitig mit dem 3-Wege-Ventil 26 und ausgangsseitig mit einem Proportionalmagnetventil 29' unmittelbar verbunden ist. Mit dem Massendurchflußmeßelement 31' und dem Proportionalmagnetventil 29', das ausgangsseitig zum Schalldämpfer führt, ist ein Steuerelement 37 verbunden, das in ebenfalls nicht dargestellter Weise an Spannung anlegbar ist. Der vom Steuerelement 37' einstellbare und erfaßte Massenfluß im Massendurchflußmeßelement 31' ist direkt proportional zum Volumen des zu messenden gasförmigen Mediums.

Einer Probenahme und Prüfung der mikrobiologischen Qualität einer definierten Menge eines druckbeaufschlagten gasförmigen Mediums geht ein Blindversuch ohne steriles Autoklavierteil voraus, um die Einstellwerte des Meßteils 12, 12' zu überprüfen bzw. einzuregeln. Ist dies erfolgt, geht die Durchführung der Messung folgendermaßen vor sich: Das mit dem Sterilfilter 17 versehene und insgesamt ebenfalls sterile Autoklavierteil 11 wird bei geschlossenem Absperrventil 18 mit dem Gaseintritt 13 und mit dem Meßteil 12 bzw. 12' verbunden. Nach dem Verbinden des Steuerelementes 37, 37', dem Öffnen des Absperrventils 18 und der Durchflußeinstellung des 3-Wege-Schiebeventils 26 wird mit Hilfe des Steuerelements 37 die Vorrichtung 10, 10' zugeschaltet, so daß bis zum am Steuerelement eingestellten zeitlichen Maßende eine definierte Menge des zu prüfenden druckbeaufschlagten gasförmigen Mediums durch das Meßteil 12, 12' geströmt ist. Am Ende dieser Messung wird das Absperrventil 18 geschlossen und das Schieberventil 26 zur Druckentspannung des Autoklavierteils 11 und des Meßteils 12, 12' bei gleichzeitigem Öffnen des Ventils 29 bzw. 29' geöffnet. Nach Abkuppeln des Autoklavierteil 11 vom Gaseintritt 13 und vom Meßteil 12, 12' wird das Autoklavierteil 11 zur mikrobiologischen Auswertung des darin enthaltenen Sterilfilters vorbereitet und das Sterilfilter 17 entnommen und ausgewertet.

Sowohl bei der Vorrichtung 10 als auch bei der Vorrichtung 10' sind die einzelnen Bauelemente des Meßteils 12 bzw. 12', ein Druckgaßanschlußschlauch zwischen Autoklavierteil 11 und Druckgassystem und vorzugsweise auch das Autoklavierteil 11 selbst in einem tragbaren Koffer zur Durchführung von ortunabhänigen Messungen angeordnet.

## Patentansprüche

1. Vorrichtung zum Prüfen der mikrobiologischen Qualität einer definierten Menge eines druckbeaufschlagten gasförmigen Mediums, **gekennzeichnet durch** ein mit einem Sterilfilter (17) versehenes, steriles Autoklavierteil (11), dem das zu prüfende gasförmige Medium zugeführt ist, und ein der Durchflußmessung dienendes Meßteil (12, 12') zum einstellbaren Bestimmen der definierten zu prüfenden Gasmenge, welches Meßteil mit dem Autoklavierteil (11) kuppelbar verbunden ist.

2. Vorrichtung nach Anspruch 1, damit gekennzeichnet, daß das Autoklavierteil (11) sterilisierbar ist.

3. Vorrichtung nach Anspruch 1 kder 2, dadurch gekennzeichnet, daß das sterile bzw. sterilisierbare Autoklavierteil (11) mit einem das Sterilfilter (17) aufnehmenden öffnenbaren Gehäuse (16) und gaseintrittseitig mit einem Absperrventil (18) versehen ist.

4. Vorrichtung nach mindestens einem der Ansprüche 1 bis 3, dadurch gekennzeichnet, daß das Autoklavierteil (11) über eine von Hand betätigbare Clamp-Kupplung (21) mit dem Meßteil (12, 12') verbindbar ist.

5. Vorrichtung nach mindestens einem der vorhergehenden Ansprüche, dadurch gekennzeichnet, daß das Meßteil (12, 12') gaseintrittseitig mit einem 3-Wege-Ventil (26) versehen ist.

6. Vorrichtung nach Anspruch 5, dadurch gekennzeichnet, daß das 3-Wege-Ventil durch ein Schieberventil (26) gebildet ist.

7. Vorrichtung nach mindestens einem der Ansprüche 1 bis 6, dadurch gekennzeichnet, daß das Meßteil (12) eine Venturi-Meßstrecke (31) mit zugeordneter und einer Meßturbine (32) versehener Bypass-Strecke (33) aufweist.

8. Vorrichtung nach Anspruch 7, dadurch gekennzeichnet, daß gaseintrittsseitig der Venturi-Meßstrecke (31) ein Druckminderventil (34) vorgesehen ist.

9. Vorrichtung nach Anspruch 7 oder 8, dadurch gekennzeichnet, daß gasaustrittsseitig der Venturi-Meßstrecke (31) ein von Hand einstellbares Drosselventil (34) angeordnet ist.

10. Vorrrichtung nach mindestens einem der Ansprüche 7 bis 9, dadurch gekennzeichent, daß das Meßteil (12) mit einem Steuerelement (37) versehen ist, das mit der Meßturbine (32) in der Bypass-Strecke (33) und mit einem Absperrmagnetventil (29) verbunden und mit einer Zeitschaltuhr versehen ist.

11. Vorrichtung nach mindestens einem der Ansprüche 1 bis 6, dadurch gekennzeichnet, daß das Meßteil (12') ein Massedurchflußelement ausweist.

12. Vorrichtung nach Anspruch 11, dadurch gekennzeichnet, daß gasaustrittseitig des Massedurchflußmeßelementes (31') ein Regelventil (29') angeordnet ist.

13. Vorrichtung nach Anspruch 11 oder 12, dadurch gekennzeichnet, daß das Meßteil (12') mit einem Steuerelement (37') versehen ist, das mit dem Massedurchflußmeßelement (31') und mit dem Regelventil (29') verbunden ist.

14. Vorrichtung nach mindestens einem der vorhergehenden Ansprüche, dadurch gekennzeichnet, daß das Meßteil (12, 12') gasaustrittsseitig einen Schalldämpfer (36) aufweist.

15. Vorrichtung nach mindestens einem der vorhergehenden Ansprüche, dadurch gekennzeichnet, daß sie in einem tragbaren Koffer oder dergleichen untergebracht ist.
